# EUROPEAN PATENT APPLICATION

(11) **EP 4 486 031 A1**
(43) Date of publication of application: **01.01.2025**
(21) Application number: 23765941.2
(22) Date of filing: 06.03.2023
(51) Int. Cl.: H04W 72/04

(54) **UPLINK OBJECT SENDING METHOD AND APPARATUS, COMMUNICATION DEVICE, SYSTEM, AND STORAGE MEDIUM**

(30) Priority: 08.03.2022 CN 202210220491
(71) Applicant: VIVO MOBILE COMMUNICATION CO., LTD., Dongguan, Guangdong 523863 (CN)
(72) Inventor: SONG, Yang, Dongguan, Guangdong 523863 (CN); SUN, Rongrong, Dongguan, Guangdong 523863 (CN); LIU, Hao, Dongguan, Guangdong 523863 (CN); TAMRAKAR, Rakesh, Dongguan, Guangdong 523863 (CN); YANG, Yu, Dongguan, Guangdong 523863 (CN)
(74) Representative: Murgitroyd & Company
(86) International application number: PCT/CN2023/079849
(87) International publication number: WO 2023/169363

(57) **Abstract**

This application discloses a method and an apparatus for transmitting an uplink object, a communication device and system, and a storage medium, pertaining to the field of communication technology. The method for transmitting an uplink object in an embodiment of this application includes: determining, by a terminal, N first uplink objects from at least two uplink objects of one time unit, where transmission time of the N first uplink objects overlap, and the at least two uplink objects are indicated by a network-side device, where N is an integer greater than 1; and transmitting, by the terminal, the N first uplink objects simultaneously, or transmitting a second uplink object; where each first uplink object of the N first uplink objects belongs to one set of uplink objects in N sets of uplink objects corresponding to the at least two uplink objects; the first uplink object is at least one of the following: a physical uplink shared channel PUSCH, a physical uplink control channel PUCCH, and an uplink reference signal RS; and the second uplink object is any one of the following: a first target uplink object in the N first uplink objects, and a second target uplink object in the at least two uplink objects excluding the N first uplink objects.

## Description

### CROSS-REFERENCE TO RELATED APPLICATION

This application claims priority to Chinese Patent Application No. 202210220491.5, filed in China on March 8, 2022, which is incorporated herein by reference in its entirety.

### TECHNICAL FIELD

This application pertains to the field of communication technology, and specifically relates to a method and an apparatus for transmitting an uplink object, a communication device and system, and a storage medium.

### BACKGROUND

Currently, when a terminal transmits an uplink object (for example, an uplink channel/signal), if transmission times of at least two uplink objects overlap, the terminal may transmit data of one uplink object using a resource of another uplink object according to a multiplexing or discarding rule in the related art, or may cancel the transmission of at least one uplink object.

However, according to the foregoing method, the terminal needs to discard or multiplex some of the uplink objects with an overlapping transmission time based on the rules in the related art, resulting in low efficiency of transmitting uplink objects by the terminal.

### SUMMARY

Embodiments of this application provide a method and an apparatus for transmitting an uplink object, a communication device and system, and a storage medium, so as to resolve the problem of low efficiency in transmitting uplink objects by a terminal.

According to a first aspect, a method for transmitting an uplink object is provided, where the method includes: determining, by a terminal, N first uplink objects from at least two uplink objects of one time unit, transmission time of the N first uplink objects overlap, and the at least two uplink objects are indicated by a network-side device, where N is an integer greater than 1; and transmitting, by the terminal, the N first uplink objects simultaneously, or transmitting a second uplink object; where each first uplink object of the N first uplink objects belongs to one set of uplink objects in N sets of uplink objects corresponding to the at least two uplink objects; the first uplink object is at least one of the following: a physical uplink shared channel (Physical Uplink Shared Channel, PUSCH), a physical uplink control channel (Physical Uplink Control Channel, PUCCH), and an uplink reference signal (Reference Signal, RS); and the second uplink object is any one of the following: a first target uplink object in the N first uplink objects, and a second target uplink object in the at least two uplink objects excluding the N first uplink objects.

According to a second aspect, an apparatus for transmitting an uplink object is provided, where the apparatus includes a determining module and a transmitting module; where the determining module is configured to determine N first uplink objects from at least two uplink objects of one time unit, transmission time of the N first uplink objects overlap, and the at least two uplink objects are indicated by a network-side device, where N is an integer greater than 1; and the transmitting module is configured to transmit the N first uplink objects simultaneously or transmit a second uplink object; where each first uplink object of the N first uplink objects belongs to one set of uplink objects in N sets of uplink objects corresponding to the at least two uplink objects; the first uplink object is at least one of the following: a PUSCH, a PUCCH, and an uplink RS; and the second uplink object is any one of the following: a first target uplink object in the N first uplink objects, and a second target uplink object in the at least two uplink objects excluding the N first uplink objects.

According to a third aspect, a method for transmitting an uplink object is provided, where the method includes: indicating, by a network-side device, at least two uplink objects to a terminal; and transmitting, by the network-side device, indication information to the terminal; where the indication information is used to indicate that the terminal is in a target state; and the target state includes any one of the following: an allowed simultaneous transmission state, and a disallowed non-simultaneous transmission state.

According to a fourth aspect, an apparatus for transmitting an uplink object is provided, where the apparatus includes an indication module and a transmitting module; where the indication module is configured to indicate at least two uplink objects to a terminal; and the transmitting module is configured to transmit indication information to the terminal, where the indication information is used to indicate that the terminal is in a target state; and the target state includes any one of the following: an allowed simultaneous transmission state, and a disallowed non-simultaneous transmission state.

According to a fifth aspect, a terminal is provided, where the terminal includes a processor and a memory; where the memory stores a program or instructions capable of running on the processor, and when the program or instructions are executed by the processor, the steps of the method according to the first aspect are implemented.

According to a sixth aspect, a terminal is provided and includes a processor and a communication interface, where the processor is configured to determine N first uplink objects from at least two uplink objects of one time unit, transmission time of the N first uplink objects overlap, and the at least two uplink objects are indicated by a network-side device, where N is an integer greater than 1; and the communication interface is configured to transmit the N first uplink objects simultaneously or transmit a second uplink object; where each first uplink object of the N first uplink objects belongs to one set of uplink objects in N sets of uplink objects corresponding to the at least two uplink objects; the first uplink object is at least one of the following: a PUSCH, a PUCCH, and an uplink RS; and the second uplink object is any one of the following: a first target uplink object in the N first uplink objects, and a second target uplink object in the at least two uplink objects excluding the N first uplink objects.

According to a seventh aspect, a network-side device is provided, where the network-side device includes a processor and a memory, where the memory stores a program or instructions capable of running on the processor, and when the program or the instructions are executed by the processor, the steps of the method according to the third aspect are implemented.

According to an eighth aspect, a network-side device is provided and includes a processor and a communication interface, where the processor is configured to indicate at least two uplink objects to a terminal; and the communication interface is configured to transmit indication information to the terminal; where the indication information is used to indicate that the terminal is in a target state; and the target state includes any one of the following: an allowed simultaneous transmission state, and a disallowed non-simultaneous transmission state.

According to a ninth aspect, a communication system is provided and includes a terminal and a network-side device, where the terminal can be used to perform the steps of the method for transmitting an uplink object according to the first aspect, and the network-side device can be used to perform the steps of the method for transmitting an uplink object according to the third aspect.

According to a tenth aspect, a readable storage medium is provided, where the readable storage medium stores a program or instructions thereon, and when the program or the instructions are executed by a processor, the steps of the method according to the first aspect are implemented, or the steps of the method according to the third aspect are implemented.

According to an eleventh aspect, a chip is provided, where the chip includes a processor and a communication interface, where the communication interface is coupled to the processor, and the processor is configured to run a program or instructions to implement the steps of the method according to the first aspect or the steps of the method according to the third aspect.

According to a twelfth aspect, a computer program/program product is provided, where the computer program/program product is stored in a storage medium, and the computer program/program product is executed by at least one processor to implement the steps of the method for transmitting an uplink object according to the first aspect, or to implement the steps of the method for transmitting an uplink object according to the third aspect.

In the embodiments of this application, a terminal may determine N first uplink objects from at least two uplink objects of one time unit, transmission time of the N first uplink objects overlap, and the at least two uplink objects are indicated by a network-side device, where N is an integer greater than 1; and the terminal may transmit the N first uplink objects simultaneously or transmit a second uplink object; where each first uplink object of the N first uplink objects belongs to one set of uplink objects in N sets of uplink objects corresponding to the at least two uplink objects; the first uplink object is at least one of the following: a PUSCH, a PUCCH, and an uplink RS; and the second uplink object is any one of the following: a first target uplink object in the N first uplink objects, and a second target uplink object in the at least two uplink objects excluding the N first uplink objects. Based on this method, because the N first uplink objects whose transmission time overlap or the second uplink object are/is determined by the terminal based on the N sets of uplink objects corresponding to the at least two uplink objects indicated by the network-side device, and the terminal may transmit the N first uplink objects simultaneously or transmit the second uplink object, there is no need to directly discard or multiplex some of the uplink objects according to a discarding and multiplexing rule in the related art, which can improve the efficiency of transmitting uplink objects by the terminal.

### BRIEF DESCRIPTION OF DRAWINGS

FIG. 1 is a schematic structural diagram of a wireless communication system according to an embodiment of this application;
FIG. 2 is a first flowchart of a method for transmitting an uplink object according to an embodiment of this application;
FIG. 3 is a second flowchart of a method for transmitting an uplink object according to an embodiment of this application;
FIG. 4 is a first schematic structural diagram of an apparatus for transmitting an uplink object according to an embodiment of this application;
FIG. 5 is a second schematic structural diagram of an apparatus for transmitting an uplink object according to an embodiment of this application;
FIG. 6 is a schematic diagram of a hardware structure of a communication device according to an embodiment of this application;
FIG. 7 is a schematic diagram of a hardware structure of a terminal according to an embodiment of this application; and
FIG. 8 is a schematic diagram of a hardware structure of a network-side device according to an embodiment of this application.

### DESCRIPTION OF EMBODIMENTS

The following clearly describes the technical solutions in the embodiments of this application with reference to the accompanying drawings in the embodiments of this application. Apparently, the described embodiments are only some rather than all of the embodiments of this application. All other embodiments obtained by persons of ordinary skill in the art based on the embodiments of this application shall fall within the protection scope of this application.

The terms "first", "second", and the like in this specification and claims of this application are used to distinguish between similar objects rather than to describe a specific order or sequence. It should be understood that terms used in this way are interchangeable in appropriate circumstances so that the embodiments of this application can be implemented in other orders than the order illustrated or described herein. In addition, "first" and "second" are usually used to distinguish objects of a same type, and do not restrict a quantity of objects. For example, there may be one or a plurality of first objects. In addition, "and/or" in the specification and claims represents at least one of connected objects, and the character "/" generally indicates that the associated objects have an "or" relationship.

It is worth noting that the technology described in the embodiments of this application is not limited to long term evolution (Long Term Evolution, LTE)/LTE-Advanced (LTE-Advanced, LTE-A) systems, but may also be used in other wireless communication systems such as code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency division multiple access (Single-carrier Frequency-Division Multiple Access, SC-FDMA), and other systems. The terms "system" and "network" in the embodiments of this application are often used interchangeably, and the technology described herein may be used in the above-mentioned systems and radio technologies as well as other systems and radio technologies. In the following descriptions, a new radio (New Radio, NR) system is described for an illustration purpose, and NR terms are used in most of the following descriptions, although these technologies may also be applied to other applications than an NR system application, for example, the 6th generation (6th Generation, 6G) communication system.

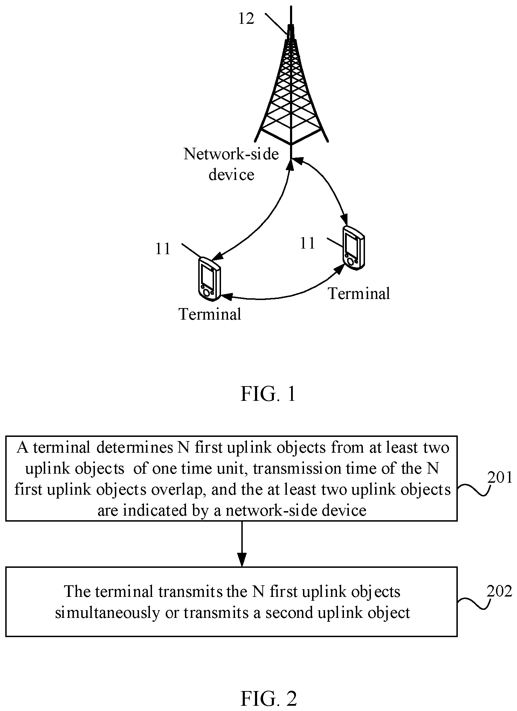

FIG. 1 is a block diagram of a wireless communication system to which the embodiments of this application are applicable. The wireless communication system includes a terminal 11 and a network-side device 12. The terminal 11 may be a terminal-side device, such as a mobile phone, a tablet personal computer (Tablet Personal Computer), a laptop computer (Laptop Computer) or notebook computer, a personal digital assistant (Personal Digital Assistant, PDA), a palmtop computer, a netbook, an ultra-mobile personal computer (ultra-mobile personal computer, UMPC), a mobile Internet device (Mobile Internet Device, MID), an augmented reality (augmented reality, AR)/virtual reality (virtual reality, VR) device, a robot, a wearable device (Wearable Device), vehicular user equipment (Vehicle User Equipment, VUE), pedestrian user equipment (Pedestrian User Equipment, PUE), smart-home appliance (a smart-home device having a wireless communication function, for example, a refrigerator, a television, a washing machine, or furniture), a game console, a personal computer (personal computer, PC), a teller machine, or a self-service machine. The wearable device includes a smart watch, a smart band, smart earphones, smart glasses, smart jewelry (a smart bracelet, a smart chain bracelet, a smart ring, a smart necklace, a smart anklet, a smart chain anklet, or the like), a smart wrist band, smart clothing, or the like. It should be noted that a specific type of the terminal 11 is not limited in the embodiments of this application. The network-side device 12 may include an access network device or a core network device, where the access network device 12 may also be referred to as a radio access network device, a radio access network (Radio Access Network, RAN), a radio access network function, or a radio access network unit. The access network device 12 may include a base station, a WLAN access point, a Wi-Fi node, or the like. The base station may be referred to as a Node B, an evolved Node B (eNB), an access point, a base transceiver station (Base Transceiver Station, BTS), a radio base station, a radio transceiver, a basic service set (Basic Service Set, BSS), an extended service set (Extended Service Set, ESS), a home B node, a home evolved B node, a transmission reception point (Transmission Reception Point, TRP), or other appropriate terms in the field, provided that the same technical effect is achieved. The base station is not limited to specific technical terms. It should be noted that in the embodiments of this application, the base station in the NR system is used as an example for introduction, and the specific type of the base station is not limited. The core network device may include but is not limited to at least one of the following: a core network node, a core network function, a mobility management entity (Mobility Management Entity, MME), an access management function (Access Management Function, AMF), a session management function (Session Management Function, SMF), a user plane function (User Plane Function, UPF), a policy control function (Policy Control Function, PCF), a policy and charging rules function (Policy and Charging Rules Function, PCRF) unit, an edge application server discovery function (Edge Application Server Discovery Function, EASDF), unified data management (Unified Data Management, UDM), a unified data repository (Unified Data Repository, UDR), a home subscriber server (Home Subscriber Server, HSS), a centralized network configuration (Centralized network configuration, CNC), a network repository function (Network Repository Function, NRF), a network exposure function (Network Exposure Function, NEF), a local NEF (Local NEF, or L-NEF), a binding support function (Binding Support Function, BSF), and an application function (Application Function, AF). It should be noted that the embodiments of this application are described with only the core network device in the NR system as an example, but the core network device is not limited to any specific type.

The following describes in detail the method and apparatus for transmitting an uplink object, communication device and system, and storage medium provided in the embodiments of this application by using some embodiments and application scenarios thereof with reference to the accompanying drawings.

Currently, in the 3rd generation partnership project (3rd Generation Partnership Project, 3GPP) protocol, a terminal can transmit only one uplink channel or uplink signal in one time unit (for example, slot slot or sub-slot). When transmitting times of multiple uplink channels/signals overlap, a multiplexing or discarding criterion is defined. In the criterion, an uplink channel may include a PUCCH, a PUSCH, a physical random access channel (Physical Random Access Channel, PRACH), and the like; and the uplink signal may include a sounding reference signal (Sounding Reference Signal, SRS), uplink (UpLink, UL), a phase tracking reference signal (Phase Tracking Reference Signal, PTRS), a UL demodulation reference signal (Demodulation Reference Signal, DMRS), and the like. The PUCCH may be used to transmit various uplink control information (Uplink control information, UCI), including hybrid automatic repeat request-acknowledgment/negative-acknowledgment (Hybrid Automatic Repeat Request-ACK/NACK, HARQ-ACK/NACK), uplink scheduling request (Scheduling Request, SR), channel state information (Channel State Information, CSI) report, and the like.

In Rel-15/16, an uplink transmission parameter used by an uplink channel/signal, including information such as an uplink transmission beam, is determined by spatial relation information SpatialRelationInfo. In order to simplify beam indication, a unified transmission configuration indicator (Transmission Configuration Indicator, TCI) framework is designed in Rel-17, in which, a UL TCI state similar to a downlink transmission parameter - DL TCI state (state), which includes information such as the downlink (DownLink, DL) receive beam, is introduced, and both PUCCH and PUSCH may use a same UL TCI state, or even both UL TCI state and DL TCI state are indicated by one joint TCI state in a case of joint TCI indication. In a multi-transmission reception point/multi-antenna panel scenario supported by Rel-16, a terminal can receive the same data or different data from multiple transmission reception points (Transmission Reception Point, TRP) simultaneously so as to improve the reliability or throughput performance of the transmission, and can support two TRPs to independently schedule their respective PUSCHs and PUCCHs, but still cannot simultaneously transmit uplink channels/signals whose transmission time overlap. In Rel-17, multiple transmitting reception points are further enhanced. In uplink, PUCCH/PUSCH is supported to use multiple beams to receive/transmit in a time-division multiplexing (Time-Division Multiplexing, TDM) manner.

Although 3GPP has discussed a case where the terminal has multiple transmit antenna panels and has a capability of support multiple antenna panels transmitting simultaneously, the protocol in the related art does not support multiple antenna panels transmitting signals simultaneously and multiple uplink channels/signals transmitting simultaneously.

To resolve the foregoing issue, in an embodiment of this application, a terminal may determine N first uplink objects from at least two uplink objects of one time unit, transmission time of the N first uplink objects overlap, and the at least two uplink objects are indicated by a network-side device, where N is an integer greater than 1; and the terminal may transmit the N first uplink objects simultaneously or transmit a second uplink object; where each first uplink object of the N first uplink objects belongs to one set of uplink objects in N sets of uplink objects corresponding to the at least two uplink objects; the first uplink object is at least one of the following: a PUSCH, a PUCCH, and an uplink RS; and the second uplink object is any one of the following: a first target uplink object in the N first uplink objects, and a second target uplink object in the at least two uplink objects excluding the N first uplink objects. Based on this method, because the N first uplink objects whose transmission time overlap or the second uplink object are/is determined by the terminal based on the N sets of uplink objects corresponding to the at least two uplink objects indicated by the network-side device, and the terminal may transmit the N first uplink objects simultaneously or transmit the second uplink object, there is no need to directly discard or multiplex some of the uplink objects according to a discarding and multiplexing rule in the related art, which can improve the efficiency of transmitting uplink objects by the terminal.

An embodiment of this application provides a method for transmitting an uplink object. FIG. 2 shows a flowchart of the method for transmitting an uplink object according to this embodiment of this application. As shown in FIG. 2, the method for transmitting an uplink object provided in this embodiment of this application may include the following steps 201 and 202.

Step 201. A terminal determines N first uplink objects from at least two uplink objects of one time unit, transmission time of the N first uplink objects overlap, and the at least two uplink objects are indicated by a network-side device, where N is an integer greater than 1.

In this embodiment of this application, each first uplink object of the N first uplink objects belongs to one set of uplink objects in N sets of uplink objects corresponding to the at least two uplink objects.

In this embodiment of this application, the first uplink object may be at least one of the following: a PUSCH (1), a PUCCH (2), and an uplink RS (3).

Optionally, in this embodiment of this application, the one time unit may be one slot, or may be one sub-slot.

Optionally, in this embodiment of this application, the N first uplink objects whose transmission time overlap may be that: transmission times of every two first uplink objects of the N first uplink objects are the same, or transmission times of every two first uplink objects overlap.

Optionally, in this embodiment of this application, in a case that the first uplink object is the foregoing (1), that is, the N first uplink objects are N PUSCHs, each PUSCH of the N PUSCHs may include any one of the following:
(1.1) a single PUSCH;
(1.2) one transmission of PUSCH repetitions; and
(1.3) a PUSCH transmission of one transport block TB among PUSCH transmissions of multiple TBs scheduled at one time.

Optionally, in this embodiment of this application, if each PUSCH is the foregoing (1.1), each PUSCH is a PUSCH transmitting one TB.

Optionally, in this embodiment of this application, the N PUSCHs may meet at least one of the following:
(1.1.1) a total quantity of ranks or layers of the N PUSCHs is less than or equal to a preset threshold;
(1.1.2) starting and length indicator values SLIV corresponding to the N PUSCHs are the same;
(1.1.3) scrambling sequences respectively corresponding to the N PUSCHs are different;
(1.1.4) target reference signals of the N PUSCHs respectively belong to different target reference signal code-division multiplexing groups; and
(1.1.5) a data resource element RE corresponding to one of every two PUSCHs does not overlap with an RE occupied by a target reference signal corresponding to the other PUSCH in the every two PUSCHs, and the one PUSCH performs rate matching on the target reference signal corresponding to the other PUSCH.

Optionally, in this embodiment of this application, the target reference signal may be a DMRS or a PTRS.

Optionally, in this embodiment of this application, in the foregoing (1.1.1), the preset threshold may be pre-configured or pre-defined by the network-side device, or may be prescribed by a protocol, or may be autonomously determined by the terminal.

In this embodiment of this application, in a case that the N first uplink objects are N PUSCHs, each PUSCH may include any one of a single PUSCH, one transmission of PUSCH repetitions, or a PUSCH transmission of one transport block TB among PUSCH transmissions of multiple TBs scheduled at one time, and the N PUSCHs may meet at least one of multiple conditions, the terminal may determine the N first uplink objects under various scheduling situations.

Optionally, in this embodiment of this application, in a case that the first uplink object is the foregoing (2), that is, the N first uplink objects are N PUCCHs, the N PUCCHs may meet any one of the following:
(2.1) resources of the N PUCCHs do not overlap in frequency domain;
(2.2) the N PUCCHs are PUCCHs transmitted simultaneously using N uplink transmission parameters or N antenna panels; and
(2.3) the N PUCCHs are PUCCHs transmitted simultaneously by a first PUCCH using N uplink transmission parameters or N antenna panels in a single frequency network (Single Frequency Network, SFN) manner.

In this embodiment of this application, in the foregoing (2.1), the resources of the N PUCCHs do not overlap in frequency domain to ensure that an RE occupied by the DMRS of the N PUCCHs does not overlap with a data RE.

Optionally, in this embodiment of this application, in the foregoing (2.2), the uplink transmission parameter may be at least one of the following: an uplink TCI state, an uplink transmission beam, a spatial relation (spatial relation), and a power control parameter.

Optionally, in this embodiment of this application, the first PUCCH may be any one of the following:
(2.3.1) a first target PUCCH in the N PUCCHs; and
(2.3.2) a second target PUCCH in the at least two uplink objects excluding the N PUCCHs, as determined by the terminal again.

Optionally, in this embodiment of this application, in a case that the first PUCCH is the foregoing (2.3.1), the terminal may multiplex all UCIs carried in the N PUCCHs onto the first target PUCCH. If a capacity of the first target PUCCH is limited, some UCIs are discarded, and then the first target PUCCHs may be transmitted simultaneously using N uplink transmission parameters or N antenna panels in an SFN manner (equivalent to transmitting N first target PUCCHs simultaneously). In this way, multiple TRPs of the network-side device may receive the first target PUCCHs simultaneously, improving the flexibility and reliability of transmission.

Optionally, in this embodiment of this application, in a case that the first PUCCH is the foregoing (2.3.2), the terminal may multiplex all UCIs carried in the N PUCCHs onto the second target PUCCH. If a capacity of the second target PUCCH is limited, some UCIs are discarded, and then the second target PUCCHs may be transmitted simultaneously using N uplink transmission parameters or N antenna panels in an SFN manner (equivalent to transmitting N second target PUCCHs simultaneously). In this way, multiple TRPs of the network-side device may receive the second target PUCCHs simultaneously, improving the flexibility and reliability of transmission.

In this embodiment of this application, in a case that the N first uplink objects are the N PUCCHs, the N PUCCHs may meet any one of multiple conditions, and therefore, the terminal may further improve the flexibility in determining the N first uplink objects.

Optionally, in this embodiment of this application, in a case that the first uplink object is the foregoing (3), the N first uplink objects are N uplink RSs.

Optionally, in this embodiment of this application, the uplink RS may be an SRS, a DMRS, a PTRS, or the like.

Optionally, in this embodiment of this application, each set of uplink objects in the N sets of uplink objects may include at least one uplink object.

Optionally, in this embodiment of this application, the each set of uplink objects may meet at least one of the following:
a. TRP identifiers corresponding to physical downlink control channels (Physical Downlink Control Channel, PDCCH) for scheduling the uplink objects are the same;
b. downlink transmission parameters used by PDCCHs for scheduling the uplink objects are the same;
c. using a same uplink transmission parameter; and
d. using a same antenna panel.

Optionally, in this embodiment of this application, in the foregoing a, the TRP identifier may be a control resource set pool index CORESETPoolIndex.

Optionally, in this embodiment of this application, in the foregoing b, the downlink transmission parameter may be: a downlink TCI state, a downlink transmission beam, or the like.

Optionally, in this embodiment of this application, uplink objects in each set of uplink objects may have the same priority or different priorities.

In this embodiment of this application, because each set of uplink objects in the N sets of uplink objects may include at least one uplink object and each set of uplink objects may meet at least one of multiple conditions, the flexibility of the terminal in determining the N sets of uplink objects corresponding to the at least two uplink objects can be improved.

Optionally, in this embodiment of this application, the foregoing step 201 may be specifically implemented through the following step 201a.

Step 201a. The terminal determines one first uplink object from the each set of uplink objects according to a first rule to obtain the N first uplink objects.

In this embodiment of this application, the first rule may be used to discard or multiplex uplink objects.

For specific descriptions of the first rule, reference may be made to the related descriptions in a related protocol regarding the discarding and multiplexing rules when PUCCHs, PUSCHs, SRSs, or the like have an overlapping transmission time. To avoid repetition, details are not repeated herein.

The following is an exemplary illustration of the method for transmitting an uplink object provided in this embodiment of this application.

For example, if one set of uplink objects includes K uplink objects scheduled by PDCCHs corresponding to the same TRP identifier, where K is an integer greater than 1, the terminal may determine one uplink object (that is, the first uplink object) from the K uplink objects according to the discarding and multiplexing rule in the related protocol. Furthermore, the terminal may determine N first uplink objects from the N sets of uplink objects.

In this embodiment of this application, the terminal may determine one first uplink object from the each set of uplink objects according to the first rule for discarding or multiplexing an uplink object to obtain N first uplink objects, and therefore, the N first uplink objects determined by the terminal may be prioritized uplink objects for transmitting.

Step 202. The terminal transmits the N first uplink objects (one possible implementation) simultaneously or transmits a second uplink object (another possible implementation).

In this embodiment of this application, the second uplink object may be any one of the following: a first target uplink object in the N first uplink objects; and a second target uplink object in the at least two uplink objects excluding the N first uplink objects.

Optionally, in this embodiment of this application, a quantity of first target uplink objects and a quantity of second target uplink objects may both be one.

It can be understood that in this embodiment of this application, if the first uplink object is the foregoing (2), the first target uplink object corresponds to the first target PUCCH in the foregoing (2.3.1), and the second target uplink object corresponds to the second target PUCCH in the foregoing (2.3.2).

It should be noted that in actual implementation, the second uplink object may alternatively be an uplink object determined by the terminal from the at least two uplink objects according to the discarding and multiplexing rule in the related protocol.

Optionally, in this embodiment of this application, the N first uplink objects may be uplink objects meeting a first condition.

Optionally, in this embodiment of this application, the first condition may include at least one of the following:
PDCCHs for scheduling the uplink objects correspond to different TRP identifiers;
PDCCHs for scheduling the uplink objects use different downlink transmission parameters;
transmitting using uplink transmission parameters that are capable of being transmitted simultaneously;
transmitting using different antenna panels that are capable of being transmitted simultaneously; and
having the same priority. Optionally, in this embodiment of this application, if the N first uplink objects meet at least one of the first condition, the terminal may transmit the N first uplink objects simultaneously.

It can be understood that if the N first uplink objects do not meet the first condition, the terminal cannot transmit the N first uplink objects simultaneously.

It should be noted that in this embodiment of this application, the first condition may alternatively be prescribed in a protocol or configured by a network side, to be specific, the terminal may transmit the N first uplink objects simultaneously only when the N first uplink objects meet at least one of the first condition prescribed in the protocol or configured by the network side.

In this embodiment of this application, because the N first uplink objects may be uplink objects meeting at least one of multiple conditions, the terminal may transmit the N first uplink objects simultaneously provided that the N first uplink objects meet at least one of the conditions, thereby improving the efficiency of the terminal in transmitting uplink objects.

Optionally, in this embodiment of this application, the first condition includes: transmitting using different antenna panels that are capable of being transmitted simultaneously; and in one possible implementation, the foregoing step 202 may be specifically implemented through the following step 202a.

Step 202a. The terminal transmits the N first uplink objects simultaneously using N first antenna panels.

In this embodiment of this application, the N first antenna panels and the N uplink transmission parameters are both in a one-to-one correspondence with the N first uplink objects.

Optionally, in this embodiment of this application, each first uplink object of the N first uplink objects may correspond to a unique first antenna panel and a unique uplink parameter, and the terminal may transmit the N first uplink objects simultaneously using the first antenna panel and uplink parameter corresponding to each first uplink object.

In this embodiment of this application, because the terminal may transmit the N first uplink objects simultaneously using the N first antenna panels and the N uplink transmission parameters that are in a one-to-one correspondence with the N first uplink objects, the simultaneous transmitting of the N first uplink objects can be achieved, and the discarding of uplink information and scheduling restrictions can be reduced.

Optionally, in this embodiment of this application, the N first uplink objects may include M non-scheduled uplink objects, where M is a positive integer less than or equal to N.

Optionally, in this embodiment of this application, the non-scheduled uplink objects may be configured grant (Configured Grant, CG) PUSCHs, periodic or semi-persistent transmitted PUCCHs, or periodic or semi-persistent transmitted SRSs.

Optionally, in this embodiment of this application, a correspondence between each non-scheduled uplink object of the M non-scheduled uplink objects and one set of uplink objects in the N sets of uplink objects may be determined based on any one of the following:
one of multiple first transmission characteristics configured by the network-side device;
one of multiple first transmission characteristics activated by the network-side device; and
one of multiple first transmission characteristics indicated by the network-side device.

Optionally, in this embodiment of this application, one of the multiple first transmission characteristics may be a characteristic prescribed in a protocol or configured by the network-side device. For example, one of the multiple first transmission characteristics may be the first transmission characteristic corresponding to a first TRP prescribed in the protocol or configured by the network-side device.

Optionally, in this embodiment of this application, the first transmission characteristic may include at least one of the following:
a TRP identifier corresponding to a PDCCH for scheduling an uplink object;
a downlink transmission parameter used by a PDCCH for scheduling an uplink obj ect;
an uplink transmission parameter used for transmitting;
an antenna panel used for transmitting; and
a priority.

Optionally, in this embodiment of this application, the terminal may determine a priority of an uplink object according to a priority index priority index field in DCI and a non-scheduled uplink object priority rule, which in turn may be used to determine the foregoing second uplink object.

In this embodiment of this application, because the N first uplink objects may include M non-scheduled uplink objects, and the correspondence between each non-scheduled uplink object of the M non-scheduled uplink objects and one set of uplink objects in the N sets of uplink objects may be determined based on one of the multiple first transmission characteristics configured/activated/indicated by the network-side device, the flexibility of the terminal in determining the N first uplink objects may be further improved.

Optionally, in this embodiment of this application, the terminal may transmit an uplink object according to indication from the network-side device. Accordingly, the foregoing step 202 may be specifically implemented through the following step 202b or 202c.

Step 202b. The terminal transmits the N first uplink objects simultaneously when the terminal is in an allowed simultaneous transmission state.

In this embodiment of this application, the terminal is in an allowed simultaneous transmission state, meaning that the network-side device indicates that the terminal may transmit multiple uplink objects simultaneously.

Step 202c. The terminal transmits the second uplink object when the terminal is in a disallowed simultaneous transmission state.

In this embodiment of this application, the terminal is in a disallowed simultaneous transmission state, meaning that the network-side device indicates that the terminal cannot transmit multiple uplink objects simultaneously or the network-side device does not indicate that the terminal is allowed for simultaneous transmission. In this case, the terminal may transmit the second uplink object.

In this embodiment of this application, the terminal may transmit different uplink objects according to whether it is in an allowed simultaneous transmission state or a disallowed simultaneous transmission state, meaning that the terminal transmits the N first uplink objects simultaneously or transmits the second uplink object. Therefore, the terminal may transmit an uplink object according to the indication of the network-side device, thereby enriching the ways the terminal transmits uplink objects.

Optionally, in this embodiment of this application, the terminal being in the allowed simultaneous transmission state may be determined based on any one of the following:
the terminal receives simultaneous transmission state indication information semi-persistent configured by a radio resource control RRC parameter; and
the terminal receives simultaneous transmission state indication information semi-persistent configured by an RRC parameter, and receives allowed simultaneous transmission indication information from a medium access control control element MAC CE or allowed simultaneous transmission indication information in downlink control information DCI.

Optionally, in this embodiment of this application, the terminal being in the disallowed simultaneous transmission state may be determined based on any one of the following:
the terminal receives non-simultaneous transmission state indication information semi-persistent configured by an RRC parameter;
the terminal receives no simultaneous transmission state indication information semi-persistent configured by an RRC parameter; and
the terminal receives simultaneous transmission state indication information semi-persistent configured by an RRC parameter, and receives disallowed simultaneous transmission indication information from a MAC CE or disallowed simultaneous transmission indication information in DCI.

In this embodiment of this application, the terminal may determine whether it is in an allowed simultaneous transmission state or a disallowed simultaneous transmission state in various ways, thereby improving the flexibility of the terminal in determining its state.

Optionally, in this embodiment of this application, before the terminal transmits an uplink object, the network-side device may transmit configuration indication information to the terminal, so that after receiving the indication information, the terminal may determine whether it is in an allowed simultaneous transmission state or a disallowed simultaneous transmission state according to the indication information. In this way, the terminal may transmit the N first uplink objects simultaneously or transmit the second uplink object based on the state.

In the method for transmitting an uplink object provided in this embodiment of this application, the N first uplink objects whose transmission time overlap or the second uplink object is determined by the terminal based on the N sets of uplink objects corresponding to the at least two uplink objects indicated by the network-side device, and the terminal may transmit the N first uplink objects simultaneously or transmit the second uplink object. Therefore, there is no need to directly discard or multiplex some of the uplink objects according to the discarding and multiplexing rule in the related art, thereby improving the efficiency of the terminal in transmitting uplink objects.

Optionally, in this embodiment of this application, in another possible implementation, the second uplink object is the first target uplink object; and then before the foregoing step 202, the method for transmitting an uplink object provided in this embodiment of this application may further include the following step 203.

Step 203. The terminal determines the first target uplink object according to a target sequence.

Optionally, in this embodiment of this application, the terminal may determine the first target uplink object from the N first uplink objects according to the target sequence, so that the terminal may transmit the first target uplink object.

In this embodiment of this application, the terminal may determine the first target uplink object from the N first uplink objects according to the target sequence, it may be ensured that the first target uplink object determined by the terminal is be more important, so that the terminal may give priority to transmitting the first target uplink object.

Optionally, in this embodiment of this application, the target sequence may be determined based on at least one of the following:
A. an uplink object scheduled by a TRP prescribed in a protocol or configured by a network;
B. an uplink object determined by the terminal;
C. whether an uplink object multiplexes UCI;
D. a priority of UCI carried in an uplink object;
E. a transmitting priority of an uplink object;
F. a transmitting start time of an uplink object;
G. a start or end time of a PDCCH for scheduling an uplink object;
H. a size of modulation coding scheme MCS of an uplink object; and
I. a size of rank or layer of an uplink object.

Optionally, in this embodiment of this application, in the foregoing C, the terminal may determine an uplink object multiplexing UCI as the first target uplink object.

Optionally, in this embodiment of this application, in the foregoing D, the terminal may determine an uplink object with a high UCI priority as the first target uplink object.

For example, the terminal may determine a priority of each first uplink object according to the DCI (for example, priority index field or other indication field in the DCI), and determine the first uplink object with a highest priority as the first target uplink object.

Optionally, in this embodiment of this application, in the foregoing E, the terminal may determine an uplink object with a high transmitting priority as the first target uplink object.

Optionally, in this embodiment of this application, in the foregoing F, the terminal may determine an uplink object with an earlier transmitting start time as the first target uplink obj ect.

Optionally, in this embodiment of this application, in the foregoing G, the terminal may determine the uplink object with an earlier start or end time of a PDCCH scheduling the uplink object as the first target uplink object.

Optionally, in this embodiment of this application, in the foregoing H, the terminal may determine an uplink object with a larger MCS as the first target uplink object.

Optionally, in this embodiment of this application, in the foregoing I, the terminal may determine an uplink object with a higher rank or layer as the first target uplink object.

It should be noted that if multiple first uplink objects simultaneously meet the conditions in the foregoing A to I, the terminal may determine the first target uplink object based on types of the multiple first uplink objects and a specific transmitting scenario.

In this embodiment of this application, the terminal may determine the first target uplink object according to at least one of multiple conditions, and therefore, the flexibility of the terminal in determining the first target uplink object can be improved.

Optionally, in this embodiment of this application, before the foregoing step 201, the method for transmitting an uplink object provided in this embodiment of this application may further include the following step 204.

Step 204. The terminal dynamically transmits signaling to the network-side device.

In this embodiment of this application, the signaling may be used to indicate at least one of the following:
whether the terminal expects to transmit uplink objects simultaneously; and
antenna panels expected by the terminal to be used for transmitting uplink objects.

Optionally, in this embodiment of this application, dynamically transmitting signaling may be transmitting signaling in UCI.

Optionally, in this embodiment of this application, if the signaling indicates that the terminal expects to transmit uplink objects simultaneously, the network-side device may transmit configuration indication information to the terminal after receiving the signaling to indicate whether the terminal may transmit uplink objects simultaneously.

Optionally, in this embodiment of this application, if the signaling indicates that the terminal does not expect to transmit uplink objects simultaneously, the terminal may transmit the second uplink object.

Optionally, in this embodiment of this application, if the signaling indicates antenna panels expected by the terminal to be used for transmitting uplink objects, the network-side device may measure interference between the multiple antenna panels after receiving the signaling, and transmit configuration indication information to the terminal based on a measurement result.

In this embodiment of this application, the terminal may dynamically transmit signaling to the network-side device to indicate whether the terminal expects to transmit uplink objects simultaneously or to indicate antenna panels expected by the terminal to be used for transmitting uplink objects, and therefore, the network-side device may transmit configuration indication information to the terminal based on the signaling, thereby further improving the flexibility of the terminal in transmitting uplink objects.

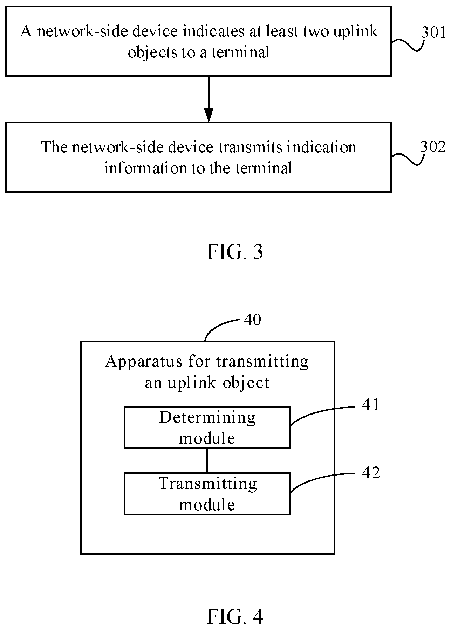

An embodiment of this application provides a method for transmitting an uplink object. FIG. 3 shows a flowchart of the method for transmitting an uplink object according to this embodiment of this application. As shown in FIG. 3, the method for transmitting an uplink object provided in this embodiment of this application may include the following steps 301 and 302.

Step 301. A network-side device indicates at least two uplink objects to a terminal.

Step 302. The network-side device transmits indication information to the terminal.

In this embodiment of this application, the indication information may be used to indicate that the terminal is in a target state, and the target state may include any one of the following: an allowed simultaneous transmission state, and a disallowed non-simultaneous transmission state.

Optionally, in this embodiment of this application, the indication information may be one bit. If the bit is 0, it indicates that the terminal is in a disallowed non-simultaneous transmission state; and if the bit is 1, it indicates that the terminal is in an allowed non-simultaneous transmission state.

Optionally, in this embodiment of this application, if the indication information indicates that the terminal is in an allowed simultaneous transmission state, the network-side device is ready to simultaneously receive the N first target uplink objects; and if the indication information indicates that the terminal is in a disallowed simultaneous transmission state, the network-side device is ready to receive only the second uplink object, or still ready to simultaneously receive the N first target uplink objects.

Optionally, in this embodiment of this application, the indication information may be determined according to an SRS transmitted by the terminal.

Optionally, in this embodiment of this application, the SRS may be used by the network-side device to measure interference between antenna panels corresponding to the at least two uplink objects; or may be used by the network-side device to measure interference between transmitting signals determined using at least two uplink transmission parameters corresponding to the at least two uplink objects.

It can be understood that if the network-side device measures based on the foregoing SRS that the interference between the antenna panels corresponding to the at least two uplink objects or between transmitting signals determined using at least two uplink transmission parameters corresponding to the at least two uplink objects is large, the indication information is used to indicate that the terminal is in a disallowed simultaneous transmission state; and if the network-side device measures based on the foregoing SRS that the interference between the antenna panels corresponding to the at least two uplink objects or between transmitting signals determined using at least two uplink transmission parameters corresponding to the at least two uplink objects is small, the indication information is used to indicate that the terminal is in an allowed simultaneous transmission state.

In this embodiment of this application, the indication information may be determined based on the SRS transmitted by the terminal, and the SRS may be used by the network-side device to measure the interference between the antenna panels corresponding to the at least two uplink objects or between the transmitting signals determined using at least two uplink transmission parameters, and therefore, the target state may be dynamically determined based on the interference, improving the accuracy of the configuration indication information transmitted by the network-side device.

In the method for transmitting an uplink object provided in this embodiment of this application, because the network-side device may indicate at least two uplink objects to the terminal and may transmit indication information to the terminal to indicate whether the terminal is in an allowed simultaneous transmission state or a disallowed non-simultaneous transmission state, the terminal may transmit N first uplink objects in the at least two uplink objects simultaneously or transmit a second uplink object in the at least two uplink objects based on the indication information. In this way, the terminal does not need to directly discard or multiplex some of the uplink objects from the at least two uplink objects according to a discarding and multiplexing rule in the related art, thereby improving the efficiency of the terminal in transmitting uplink objects.

Optionally, in this embodiment of this application, before the foregoing step 302, the method for transmitting an uplink object provided in this embodiment of this application can further include the following step 303.

Step 303. The network-side device receives signaling dynamically transmitted by the terminal.

In this embodiment of this application, the signaling may be used to indicate at least one of the following:
whether the terminal expects to transmit uplink objects simultaneously; and
antenna panels expected by the terminal to be used for transmitting uplink objects.

Optionally, in this embodiment of this application, the foregoing step 302 may be specifically implemented through the following step 302a.

Step 302a. The network-side device transmits indication information to the terminal based on the signaling.

For specific descriptions in this embodiment of this application, reference may be made to the related descriptions in the foregoing embodiment. To avoid repetition, details are not repeated herein.

In this embodiment of this application, the network-side device may receive the signaling dynamically transmitted by the terminal to indicate whether the terminal expects to transmit uplink objects simultaneously or indicate antenna panels expected by the terminal to be used for transmitting uplink objects, and transmit the indication information to the terminal based on the signaling, and therefore, the accuracy of the indication information transmitted by the network-side device can be improved.

The method for transmitting an uplink object provided in this embodiment of this application may be executed by an apparatus for transmitting an uplink object or a control module in this apparatus for transmitting an uplink object to execute the method for transmitting an uplink object. In this embodiment of this application, the apparatus for transmitting an uplink object executing the method for transmitting an uplink object is used as an example to illustrate the apparatus for transmitting an uplink object provided in this embodiment of this application.

With reference to FIG. 4, an embodiment of this application provides an apparatus 40 for transmitting an uplink object, where the apparatus 40 for transmitting an uplink object may include a determining module 41 and a transmitting module 42. The determining module 41 may be configured to determine N first uplink objects from at least two uplink objects of one time unit, transmission time of the N first uplink objects overlap, and the at least two uplink objects are indicated by a network-side device, where N is an integer greater than 1. The transmitting module 42 may be configured to transmit the N first uplink objects simultaneously or may be configured to transmit a second uplink object. Each first uplink object of the N first uplink objects belongs to one set of uplink objects in N sets of uplink objects corresponding to the at least two uplink objects. The first uplink object is at least one of the following: a PUSCH, a PUCCH, and an uplink RS. The second uplink object is any one of the following: a first target uplink object in the N first uplink objects, and a second target uplink object in the at least two uplink objects excluding the N first uplink objects.

In a possible implementation, each set of uplink objects in the N sets of uplink objects may include at least one uplink object. Each set of uplink objects may meet at least one of the following: TRP identifiers corresponding to PDCCHs for scheduling the uplink objects are the same; downlink transmission parameters used by PDCCHs for scheduling the uplink objects are the same; using a same uplink transmission parameter; and using a same antenna panel.

In a possible implementation, the N first uplink objects may be uplink objects meeting a first condition; where the first condition may include at least one of the following: PDCCHs for scheduling the uplink objects correspond to different TRP identifiers; PDCCHs for scheduling the uplink objects use different downlink transmission parameters; transmitting using uplink transmission parameters that are capable of being transmitted simultaneously; transmitting using different antenna panels that are capable of being transmitted simultaneously; and having the same priority.

In a possible implementation, the first condition includes: transmitting using different antenna panels that are capable of being transmitted simultaneously. The transmitting module 42 may be configured to transmit the N first uplink objects simultaneously using N first antenna panels; where the N first antenna panels are in a one-to-one correspondence with the N first uplink objects.

In a possible implementation, the N first uplink objects may include M non-scheduled uplink objects, where M is a positive integer less than or equal to N. A correspondence between each non-scheduled uplink object of the M non-scheduled uplink objects and one set of uplink objects in the N sets of uplink objects may be determined based on any one of the following: one of multiple first transmission characteristics configured by the network-side device; one of multiple first transmission characteristics activated by the network-side device; and one of multiple first transmission characteristics indicated by the network-side device; where the first transmission characteristic may include at least one of the following: a TRP identifier corresponding to a PDCCH for scheduling an uplink object; a downlink transmission parameter used by a PDCCH for scheduling an uplink object; an uplink transmission parameter used for transmitting; an antenna panel used for transmitting; and a priority.

In a possible implementation, the N first uplink objects are N PUSCHs. Each PUSCH of the N PUSCHs may include any one of the following: a single PUSCH; one transmission of PUSCH repetitions; a PUSCH transmission of one TB among PUSCH transmissions of multiple TBs scheduled at one time. The N PUSCHs may meet at least one of the following: a total quantity of ranks or layers of the N PUSCHs is less than or equal to a preset threshold; SLIVs corresponding to the N PUSCHs are the same; scrambling sequences respectively corresponding to the N PUSCHs are different; target reference signals of the N PUSCHs respectively belong to different target reference signal code-division multiplexing groups; an RE corresponding to one of every two PUSCHs does not overlap with an RE occupied by a target reference signal corresponding to the other PUSCH in the every two PUSCHs, and the one PUSCH performs rate matching on the target reference signal corresponding to the other PUSCH. The target reference signal may be a DMRS or a PTRS.

In a possible implementation, the N first uplink objects are N PUCCHs. The N PUCCHs may meet any one of the following: resources of the N PUCCHs do not overlap in frequency domain; the N PUCCHs are PUCCHs transmitted simultaneously using N uplink transmission parameters or N antenna panels; the N PUCCHs are PUCCHs transmitted simultaneously by a first PUCCH using N uplink transmission parameters or N antenna panels in an SFN manner. The first PUCCH may be any one of the following: a first target PUCCH in the N PUCCHs; and a second target PUCCH in the at least two uplink objects excluding the N PUCCHs, as determined by the determining module 41 again.

In a possible implementation, the determining module 41 may be configured to determine one first uplink object from the each set of uplink objects according to a first rule to obtain the N first uplink objects. The first rule is used for discarding or multiplexing an uplink obj ect.

In a possible implementation, the transmitting module 42 may be configured to transmit the N first uplink objects simultaneously when the terminal is in an allowed simultaneous transmission state. The transmitting module 42 may be configured to transmit the second uplink object when the terminal is in a disallowed simultaneous transmission state.

In a possible implementation, the terminal being in the allowed simultaneous transmission state may be determined based on any one of the following: the terminal receives simultaneous transmission state indication information semi-persistent configured by an RRC parameter; and the terminal receives simultaneous transmission state indication information semi-persistent configured by an RRC parameter, and receives allowed simultaneous transmission indication information from a MAC CE or allowed simultaneous transmission indication information in DCI. The terminal being in the disallowed simultaneous transmission state may be determined according to any one of the following: the terminal receives non-simultaneous transmission state indication information semi-persistent configured by an RRC parameter; the terminal does not receive simultaneous transmission state indication information semi-persistent configured by an RRC parameter; and the terminal receives simultaneous transmission state indication information semi-persistent configured by an RRC parameter, and receives disallowed simultaneous transmission indication information from a MAC CE or disallowed simultaneous transmission indication information in DCI.

In a possible implementation, the second uplink object is the first target uplink object. The determining module 41 may further be configured to determine the first target uplink object according to a target sequence before the transmitting module 42 transmits the second uplink obj ect.

In a possible implementation, the target sequence may be determined based on at least one of the following: an uplink object scheduled by a TRP prescribed in a protocol or configured by a network; an uplink object determined by the determining module 41; whether an uplink object multiplexes UCI; a priority of UCI carried in an uplink object; a transmitting priority of an uplink object; a transmitting start time of an uplink object; a start or end time of a PDCCH for scheduling an uplink object; a size of MCS of an uplink object; and a size of rank or layer of an uplink object.

In a possible implementation, the transmitting module 42 may further be configured to dynamically transmit signaling to the network-side device before the determining module 41 determines N first uplink objects from at least two uplink objects of a target slot, transmission time of the N first uplink objects overlap, and the at least two uplink objects are indicated by the network-side device. The signaling may be used to indicate at least one of the following: whether the terminal expects to transmit uplink objects simultaneously; and antenna panels expected by the terminal to be used for transmitting uplink objects.

In the apparatus for transmitting an uplink object provided in this embodiment of this application, the N first uplink objects whose transmission time overlap or the second uplink object is determined by the apparatus for transmitting an uplink object based on the N sets of uplink objects corresponding to the at least two uplink objects indicated by the network-side device; and the apparatus for transmitting an uplink object may transmit the N first uplink objects simultaneously or transmit the second uplink object. Therefore, there is no need to directly discard or multiplex some of the uplink objects according to a discarding and multiplexing rule in the related art, thereby improving the efficiency of transmitting uplink obj ects.

The apparatus for transmitting an uplink object in this embodiment of this application may be an electronic device, such as an electronic device with an operating system, or may be a component in an electronic device, for example, an integrated circuit or chip. The electronic device may be a terminal or may be another device except the terminal. For example, the terminal may include but is not limited to the types of the terminal 11 listed above, and the another device may be a server, a network attached storage (Network Attached Storage, NAS), or the like, which are not specifically limited in the embodiments of this application.

The apparatus for transmitting an uplink object provided in this embodiment of this application can implement the processes realized by the terminal in the foregoing method embodiment, with the same technical effects achieved. To avoid repetition, details are not repeated herein.

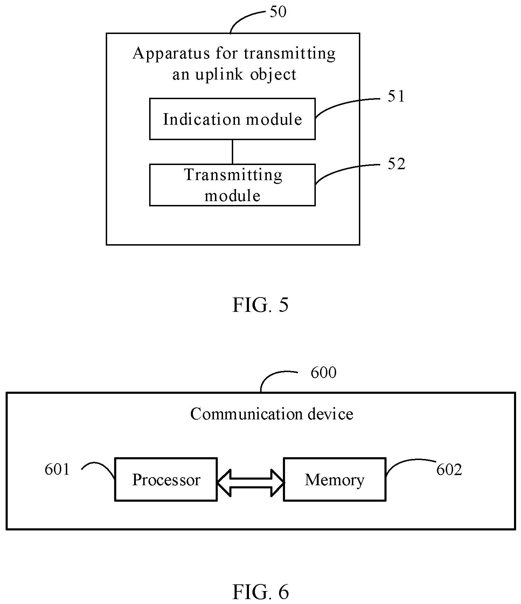

With reference to FIG. 5, this embodiment of this application provides an apparatus 50 for transmitting an uplink object, where the apparatus 50 for transmitting an uplink object may include an indication module 51 and a transmitting module 52. The indication module 51 may be configured to indicate at least two uplink objects to a terminal. The transmitting module 52 may be configured to transmit indication information to the terminal; where the indication information may be used to indicate that the terminal is in a target state; and the target state may include any one of the following: an allowed simultaneous transmission state, and a disallowed non-simultaneous transmission state.

In a possible implementation, the apparatus 50 for transmitting an uplink object may further include a measurement module. The indication information may be determined based on an SRS transmitted by the terminal; where the SRS may be used by the measurement module to measure interference between antenna panels corresponding to the at least two uplink objects; or the SRS may be used by the measurement module to measure interference between transmitting signals determined using at least two uplink transmission parameters corresponding to the at least two uplink objects.

In a possible implementation, the apparatus 50 for transmitting an uplink object may further include a receiving module. The receiving module may be configured to receive signaling dynamically transmitted by the terminal before the transmitting module 52 transmits the indication information to the terminal; where the signaling may be used to indicate at least one of the following: whether the terminal expects to transmit uplink objects simultaneously; and antenna panels expected by the terminal to be used for transmitting uplink objects. The transmitting module 52 may be specifically configured to transmit the indication information to the terminal based on the signaling.

In the apparatus for transmitting an uplink object provided in this embodiment of this application, the apparatus for transmitting an uplink object may indicate at least two uplink objects to the terminal and may transmit indication information to the terminal to indicate whether the terminal is in an allowed simultaneous transmission state or a disallowed non-simultaneous transmission state, and therefore, the terminal may transmit N first uplink objects in the at least two uplink objects simultaneously or transmit a second uplink object in the at least two uplink objects based on the indication information. In this way, the terminal does not need to directly discard or multiplex some of the uplink objects according to a discarding and multiplexing rule in the related art, thereby improving the efficiency of the terminal in transmitting uplink objects.

The apparatus for transmitting an uplink object provided in this embodiment of this application can implement the processes realized by the network-side device in the foregoing method embodiment, with the same technical effects achieved. To avoid repetition, details are not repeated herein.

Optionally, as shown in FIG. 6, an embodiment of this application further provides a communication device 600, including a processor 601 and a memory 602, where the memory 602 stores a program or instructions capable of running on the processor 601. For example, when the communication device 600 is a terminal, the program or instructions are executed by the processor 601 to implement the steps of the terminal-side method embodiment described above, with the same technical effects achieved. When the communication device 600 is a network-side device, the program or instructions are executed by the processor 601 to implement the steps of the network-side device method embodiment described above, with the same technical effects achieved. To avoid repetition, details are not repeated herein.

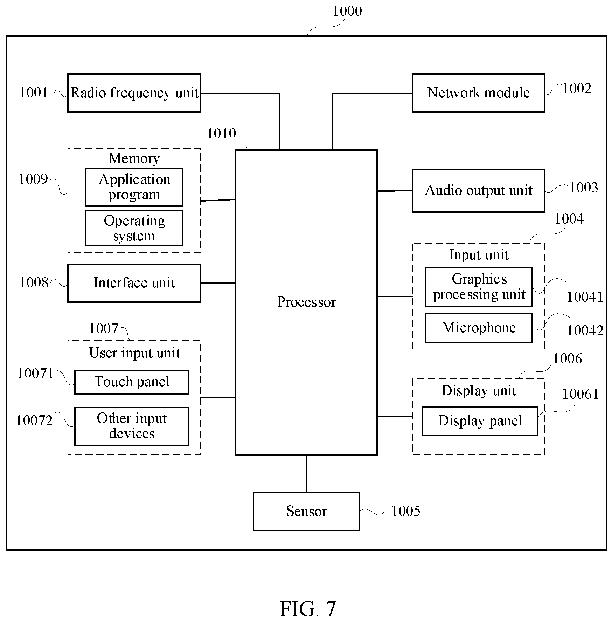

An embodiment of this application further provides a terminal, including a processor and a communication interface, where the processor may be configured to determine N first uplink objects from at least two uplink objects of one time unit, transmission time of the N first uplink objects overlap, and the at least two uplink objects are indicated by a network-side device, where N is an integer greater than 1. The communication interface may be configured to transmit N first uplink objects simultaneously or to transmit a second uplink object; where each first uplink object of the N first uplink objects belongs to one set of uplink objects in N sets of uplink objects corresponding to the at least two uplink objects; the first uplink object is at least one of the following: a PUSCH, a PUCCH, and an uplink RS; and the second uplink object is any one of the following: a first target uplink object in the N first uplink objects, and a second target uplink object in the at least two uplink objects excluding the N first uplink objects. This terminal embodiment corresponds to the foregoing method embodiment on the terminal side. All implementations in the foregoing method embodiment may be applicable to this terminal embodiment, with the same technical effects achieved. Specifically, FIG. 7 is a schematic diagram of a hardware structure of a terminal for implementing embodiments of this application.

The terminal 1000 includes, but is not limited to, at least some of components such as a radio frequency unit 1001, a network module 1002, an audio output unit 1003, an input unit 1004, a sensor 1005, a display unit 1006, a user input unit 1007, an interface unit 1008, a memory 1009, and a processor 1010.

Persons skilled in the art can understand that the terminal 1000 may further include a power supply (for example, a battery) for supplying power to the components. The power supply may be logically connected to the processor 1010 through a power management system. In this way, functions such as charge management, discharge management, and power consumption management are implemented by using the power management system. The structure of the terminal shown in FIG. 7 does not constitute any limitation on the terminal. The terminal may include more or fewer components than shown in the figure, or a combination of some components, or the components disposed differently. Details are not described herein again.

It should be understood that in this embodiment of this application, the input unit 1004 may include a graphics processing unit (Graphics Processing Unit, GPU) 10041 and a microphone 10042. The graphics processing unit 10041 processes image data of a static picture or a video that is obtained by an image capture apparatus (for example, a camera) in a video capture mode or an image capture mode. The display unit 1006 may include a display panel 10061. The display panel 10061 may be configured in a form of a liquid crystal display, an organic light-emitting diode display, or the like. The user input unit 1007 includes at least one of a touch panel 10071 and other input devices 10072. The touch panel 10071 is also referred to as a touchscreen. The touch panel 10071 may include two parts: a touch detection apparatus and a touch controller. The other input devices 10072 may include but are not limited to a physical keyboard, a function key (for example, a volume control key or an on/off key), a trackball, a mouse, and a joystick. Details are not described herein.

In this embodiment, after receiving downlink data from a network-side device, the radio frequency unit 1001 can transmit the downlink data to the processor 1010 for processing. In addition, the radio frequency unit 1001 can transmit uplink data to the network-side device. Generally, the radio frequency unit 1001 includes but is not limited to an antenna, an amplifier, a transceiver, a coupler, a low noise amplifier, a duplexer, and the like.

The memory 1009 may be configured to store software programs or instructions and various data. The memory 1009 may include first storage area for storing programs or instructions and a second storage area for storing data. The first storage area may store an operating system, an application program or instruction required by at least one function (for example, a sound playback function or an image playback function), and the like. In addition, the memory 1009 may include either a volatile memory or a non-volatile memory, or the memory 1009 may include both a volatile memory and a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDRSDRAM), an enhanced synchronous dynamic random access memory (Enhanced SDRAM, ESDRAM), a synchronous link dynamic random access memory (Synch Link DRAM, SLDRAM), and a direct rambus random access memory (Direct Rambus RAM, DRRAM). The memory 1009 in this embodiment of this application includes but is not limited to these and any other suitable types of memories.

The processor 1010 may include one or more processing units. Optionally, an application processor and a modem processor are integrated in the processor 1010. The application processor primarily processes operations relating to an operating system, user interfaces, application programs, and the like. The modem processor primarily processes radio communication signals, for example, being a baseband processor. It can be understood that the modem processor may alternatively be not integrated in the processor 1010.

The processor 1010 can be used to determine N first uplink objects from at least two uplink objects of one time unit, transmission time of the N first uplink objects overlap, and the at least two uplink objects are indicated by a network-side device, where N is an integer greater than 1. The radio frequency unit 1001 may be used to transmit N first uplink objects simultaneously or to transmit a second uplink object. Each first uplink object of the N first uplink objects belongs to one set of uplink objects in N sets of uplink objects corresponding to the at least two uplink objects. The first uplink object is at least one of the following: a PUSCH, a PUCCH, and an uplink RS. The second uplink object is any one of the following: a first target uplink object in the N first uplink objects, and a second target uplink object in the at least two uplink objects excluding the N first uplink objects.

In a possible implementation, each set of uplink objects in the N sets of uplink objects may include at least one uplink object. Each set of uplink objects may meet at least one of the following: TRP identifiers corresponding to PDCCHs for scheduling the uplink objects are the same; downlink transmission parameters used by PDCCHs for scheduling the uplink objects are the same; using a same uplink transmission parameter; and using a same antenna panel.

In a possible implementation, the N first uplink objects may be uplink objects meeting a first condition; where the first condition may include at least one of the following: PDCCHs for scheduling the uplink objects correspond to different TRP identifiers; PDCCHs for scheduling the uplink objects use different downlink transmission parameters; transmitting using uplink transmission parameters that are capable of being transmitted simultaneously; transmitting using different antenna panels that are capable of being transmitted simultaneously; and having the same priority.

In a possible implementation, the first condition includes: transmitting using different antenna panels that are capable of being transmitted simultaneously. The radio frequency unit 1001 may be specifically configured to transmit the N first uplink objects simultaneously using N first antenna panels; where the N first antenna panels are in a one-to-one correspondence with the N first uplink objects.

In a possible implementation, the N first uplink objects may include M non-scheduled uplink objects, where M is a positive integer less than or equal to N. A correspondence between each non-scheduled uplink object of the M non-scheduled uplink objects and one set of uplink objects in the N sets of uplink objects may be determined based on any one of the following: one of multiple first transmission characteristics configured by the network-side device; one of multiple first transmission characteristics activated by the network-side device; and one of multiple first transmission characteristics indicated by the network-side device; where the first transmission characteristic may include at least one of the following: a TRP identifier corresponding to a PDCCH for scheduling an uplink object; a downlink transmission parameter used by a PDCCH for scheduling an uplink object; an uplink transmission parameter used for transmitting; an antenna panel used for transmitting; and a priority.

In a possible implementation, the N first uplink objects are N PUSCHs. Each PUSCH of the N PUSCHs may include any one of the following: a single PUSCH; one transmission of PUSCH repetitions; a PUSCH transmission of one TB among PUSCH transmissions of multiple TBs scheduled at one time. The N PUSCHs may meet at least one of the following: a total quantity of ranks or layers of the N PUSCHs is less than or equal to a preset threshold; SLIVs corresponding to the N PUSCHs are the same; scrambling sequences respectively corresponding to the N PUSCHs are different; target reference signals of the N PUSCHs respectively belong to different target reference signal code-division multiplexing groups; an RE corresponding to one of every two PUSCHs does not overlap with an RE occupied by a target reference signal corresponding to the other PUSCH in the every two PUSCHs, and the one PUSCH performs rate matching on the target reference signal corresponding to the other PUSCH. The target reference signal may be a DMRS or a PTRS.

In a possible implementation, the N first uplink objects are N PUCCHs. The N PUCCHs may meet any one of the following: resources of the N PUCCHs do not overlap in frequency domain; the N PUCCHs are PUCCHs transmitted simultaneously using N uplink transmission parameters or N antenna panels; the N PUCCHs are PUCCHs transmitted simultaneously by a first PUCCH using N uplink transmission parameters or N antenna panels in an SFN manner. The first PUCCH may be any one of the following: a first target PUCCH in the N PUCCHs; and a second target PUCCH in the at least two uplink objects excluding the N PUCCHs, as determined by the processor 1010 again.

In a possible implementation, the processor 1010 may be specifically configured to determine one first uplink object from the each set of uplink objects according to a first rule to obtain the N first uplink objects. The first rule is used for discarding or multiplexing an uplink obj ect.

In a possible implementation, the radio frequency unit 1001 may be used to transmit the N first uplink objects simultaneously when the terminal is in an allowed simultaneous transmission state. The radio frequency unit 1001 may be configured to transmit the second uplink object when the terminal is in a disallowed simultaneous transmission state.

In a possible implementation, the terminal being in the allowed simultaneous transmission state may be determined based on any one of the following: the terminal receives simultaneous transmission state indication information semi-persistent configured by an RRC parameter; and the terminal receives simultaneous transmission state indication information semi-persistent configured by an RRC parameter, and receives allowed simultaneous transmission indication information from a MAC CE or allowed simultaneous transmission indication information in DCI. The terminal being in the disallowed simultaneous transmission state may be determined according to any one of the following: the terminal receives non-simultaneous transmission state indication information semi-persistent configured by an RRC parameter; the terminal does not receive simultaneous transmission state indication information semi-persistent configured by an RRC parameter; and the terminal receives simultaneous transmission state indication information semi-persistent configured by an RRC parameter, and receives disallowed simultaneous transmission indication information from a MAC CE or disallowed simultaneous transmission indication information in DCI.

In a possible implementation, the second uplink object is the first target uplink object. The processor 1010 may further be configured to determine a first target uplink object according to a target sequence before the radio frequency unit 1001 transmits the second uplink object.

In a possible implementation, the target sequence may be determined based on at least one of the following: an uplink object scheduled by a TRP prescribed in a protocol or configured by a network; an uplink object determined by the processor 1010; whether an uplink object multiplexes UCI; a priority of UCI carried in an uplink object; a transmitting priority of an uplink object; a transmitting start time of an uplink object; a start or end time of a PDCCH for scheduling an uplink object; a size of MCS of an uplink object; and a size of rank or layer of an uplink object.

In a possible implementation, the radio frequency unit 1001 may further be configured to dynamically transmit signaling to the network-side device before the processor 1010 determines N first uplink objects from at least two uplink objects of a target slot, transmission time of the N first uplink objects overlap, and the at least two uplink objects are indicated by a network-side device. The signaling may be used to indicate at least one of the following: whether the terminal expects to transmit uplink objects simultaneously; and antenna panels expected by the terminal to be used for transmitting uplink objects.

In the terminal provided in this embodiment of this application, the N first uplink objects whose transmission time overlap or the second uplink object is determined by the terminal based on the N sets of uplink objects corresponding to the at least two uplink objects indicated by the network-side device; and the terminal may transmit the N first uplink objects simultaneously or transmit the second uplink object. Therefore, there is no need to directly discard or multiplex some of the uplink objects according to a discarding and multiplexing rule in the related art, thereby improving the efficiency of the terminal in transmitting uplink objects.

The terminal provided in this embodiment of this application can implement the processes implemented by the terminal in the method embodiment, with the same technical effects achieved. To avoid repetition, details are not described herein again.

An embodiment of this application further provides a network-side device, including a processor and a communication interface, where the processor may be configured to indicate at least two uplink objects to a terminal. The communication interface may be configured to transmit indication information to the terminal; where the indication information is used to indicate that the terminal is in a target state; and the target state includes any one of the following: an allowed simultaneous transmission state, and a disallowed non-simultaneous transmission state. The network-side device embodiment corresponds to the foregoing network-side device method embodiment. All processes and implementations in the foregoing method embodiment may be applicable to the network-side device embodiment, with the same technical effect achieved.

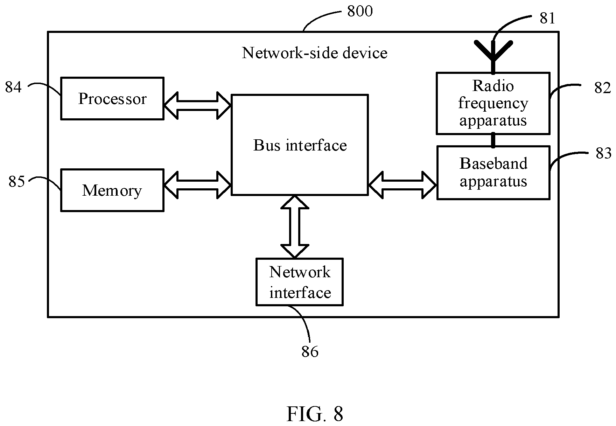

Specifically, an embodiment of this application further provides a network-side device. As shown in FIG. 8, the network-side device 800 includes: an antenna 81, a radio frequency apparatus 82, a baseband apparatus 83, a processor 84, and a memory 85. The antenna 81 is connected to the radio frequency apparatus 82. In an uplink direction, the radio frequency apparatus 82 receives information through the antenna 81, and transmits the received information to the baseband apparatus 83 for processing. In a downlink direction, the baseband apparatus 83 processes to-be-transmitted information, and transmits the information to the radio frequency apparatus 82; and the radio frequency apparatus 82 processes the received information and then transmits the information through the antenna 81.

The method performed by the network-side device in the foregoing embodiment may be implemented in the baseband apparatus 83, and the baseband apparatus 83 includes a baseband processor.

The baseband apparatus 83 may include, for example, at least one baseband board, where a plurality of chips are disposed on the baseband board. As shown in FIG. 8, one of the chips is, for example, the baseband processor, and connected to the memory 85 through a bus interface, to invoke the program in the memory 85 to perform the operations of the network device shown in the foregoing method embodiment.

The network-side device may further include a network interface 86, where the interface is, for example, a common public radio interface (common public radio interface, CPRI).

Specifically, the network-side device 800 in this embodiment of this application further includes: instructions or a program stored in the memory 85 and capable of running on the processor 84. The processor 84 invokes the instructions or program in the memory 85 to execute the method executed by the modules shown in FIG. 5, with the same technical effects achieved. To avoid repetition, details are not described herein again.

The radio frequency apparatus 82 may be configured to indicate at least two uplink objects to a terminal. The radio frequency apparatus 82 may further be configured to transmit indication information to the terminal; where the indication information may be used to indicate that the terminal is in a target state; and the target state may include any one of the following: an allowed simultaneous transmission state, and a disallowed non-simultaneous transmission state.

In a possible implementation, the indication information may be determined based on an SRS transmitted by the terminal; where the SRS may be used by the processor 84 to measure interference between antenna panels corresponding to the at least two uplink objects; or the SRS may be used by the processor 84 to measure interference between transmitting signals determined using at least two uplink transmission parameters corresponding to the at least two uplink objects.

In a possible implementation, the radio frequency apparatus 82 may further be configured to receive signaling dynamically transmitted by the terminal before transmitting the indication information to the terminal; where the signaling may be used to indicate at least one of the following: whether the terminal expects to transmit uplink objects simultaneously; and antenna panels expected by the terminal to be used for transmitting uplink objects. The radio frequency apparatus 82 may be specifically configured to transmit the indication information to the terminal based on the signaling.

In the network-side device provided in this embodiment of this application, the network-side device may indicate at least two uplink objects to the terminal and may transmit indication information to the terminal to indicate whether the terminal is in an allowed simultaneous transmission state or a disallowed non-simultaneous transmission state. Therefore, the terminal may transmit N first uplink objects in the at least two uplink objects simultaneously or transmit a second uplink object in the at least two uplink objects based on the indication information. In this way, the terminal does not need to directly discard or multiplex some of the uplink objects according to a discarding and multiplexing rule in the related art, thereby improving the efficiency of the terminal in transmitting uplink objects.

The network-side device provided in this embodiment of this application is capable of implementing all processes that are implemented by the network-side device in the foregoing method embodiment, with the same technical effect achieved. To avoid repetition, details are not described herein again.

An embodiment of this application further provides a readable storage medium. The readable storage medium stores a program or instructions. When the program or instructions are executed by a processor, the processes of the foregoing embodiment of the method for transmitting an uplink object is implemented, with the same technical effect achieved. To avoid repetition, details are not described herein again.

The processor is a processor in the terminal described in the foregoing embodiment. The readable storage medium includes a computer-readable storage medium such as a computer read-only memory ROM, a random access memory RAM, a magnetic disk, or an optical disc.

An embodiment of this application further provides a chip. The chip includes a processor and a communication interface. The communication interface is coupled to the processor. The processor is configured to run a program or instructions to implement the processes of the foregoing embodiments of the method for transmitting an uplink object, with the same technical effect achieved. To avoid repetition, details are not described herein again.

It should be understood that the chip mentioned in this embodiment of this application may also be referred to as a system-on-chip, a system chip, a system-on-a-chip, or a system on a chip, or the like.

An embodiment of this application further provides a computer program/program product, where the computer program/program product is stored in a storage medium, and the computer program/program product is executed by at least one processor to implement the processes of the foregoing embodiments of the method for transmitting an uplink object, with the same technical effects achieved. To avoid repetition, details are not repeated herein.

An embodiment of this application further provides a communication system, including a terminal and a network-side device, where the terminal may be configured to execute the steps of the terminal side method as described above, and the network-side device may be configured to execute the steps of the network-side device method as described above.

It should be noted that in this specification, the terms "include" and "comprise", or any of their variants are intended to cover a non-exclusive inclusion, such that a process, method, article, or apparatus that includes a list of elements not only includes those elements but also includes other elements that are not expressly listed, or further includes elements inherent to such process, method, article, or apparatus. In absence of more constraints, an element preceded by "includes a... " does not preclude the existence of other identical elements in the process, method, article, or apparatus that includes the element. Furthermore, it should be noted that the scope of the methods and apparatuses in the embodiments of this application is not limited to performing the functions in the order shown or discussed, but may also include performing the functions in a substantially simultaneous manner or in a reverse order depending on the functions involved. For example, the described methods may be performed in an order different from that described, and various steps may be added, omitted, or combined. In addition, features described with reference to some examples may be combined in other examples.

According to the descriptions of the foregoing embodiments, persons skilled in the art can clearly understand that the method in the foregoing embodiments may be implemented by software in combination with a necessary general hardware platform. Certainly, the method in the foregoing embodiments may alternatively be implemented by hardware. However, in many cases, the former is a preferred implementation. Based on such an understanding, the technical solutions of this application essentially or the part contributing to the prior art may be implemented in a form of a software product. The software product is stored in a storage medium (for example, a ROM/RAM, a magnetic disk, or an optical disc), and includes several instructions for instructing a terminal (which may be a mobile phone, a computer, a server, an air conditioner, a network device, or the like) to perform the methods described in the embodiments of this application.

The foregoing describes the embodiments of this application with reference to the accompanying drawings. However, this application is not limited to the foregoing specific embodiments. The foregoing specific embodiments are merely illustrative rather than restrictive. As instructed by this application, persons of ordinary skill in the art may develop many other manners without departing from principles of this application and the protection scope of the claims, and all such manners fall within the protection scope of this application.

## Claims

1. A method for transmitting an uplink object, comprising:
determining, by a terminal, N first uplink objects from at least two uplink objects of one time unit, wherein transmission time of the N first uplink objects overlap, and the at least two uplink objects are indicated by a network-side device, wherein N is an integer greater than 1; and
transmitting, by the terminal, the N first uplink objects simultaneously, or transmitting a second uplink object;
wherein each first uplink object of the N first uplink objects belongs to one set of uplink objects in N sets of uplink objects corresponding to the at least two uplink objects;
the first uplink object is at least one of the following:
a physical uplink shared channel PUSCH;
a physical uplink control channel PUCCH; and
an uplink reference signal RS; and
the second uplink object is any one of the following:
a first target uplink object in the N first uplink objects; and
a second target uplink object in the at least two uplink objects excluding the N first uplink obj ects.

2. The method according to claim 1, wherein each set of uplink objects in the N sets of uplink objects comprises at least one uplink object; and
the each set of uplink objects meets at least one of the following:
physical downlink control channels PDCCHs for scheduling the uplink objects correspond to a same transmission reception point TRP identifier;
PDCCHs for scheduling the uplink objects use a same downlink transmission parameter;
using a same uplink transmission parameter; and
using a same antenna panel.

3. The method according to claim 1, wherein the N first uplink objects are uplink objects meeting a first condition;
wherein the first condition comprises at least one of the following:
PDCCHs for scheduling the uplink objects correspond to different TRP identifiers;
PDCCHs for scheduling the uplink objects use different downlink transmission parameters;
transmitting using uplink transmission parameters that are capable of being transmitted simultaneously;
transmitting using different antenna panels that are capable of being transmitted simultaneously; and
having the same priority.

4. The method according to claim 3, wherein the first condition comprises: transmitting using different antenna panels that are capable of being transmitted simultaneously; and
the transmitting, by the terminal, the N first uplink objects simultaneously comprise:
transmitting, by the terminal, the N first uplink objects simultaneously using N first antenna panels;
wherein the N first antenna panels are in a one-to-one correspondence with the N first uplink objects.

5. The method according to claim 2 or 3, wherein the N first uplink objects comprise M non-scheduled uplink objects, wherein M is a positive integer less than or equal to N; and
a correspondence between each non-scheduled uplink object of the M non-scheduled uplink objects and one set of uplink objects in the N sets of uplink objects is determined based on any one of the following:
one of multiple first transmission characteristics configured by the network-side device;
one of multiple first transmission characteristics activated by the network-side device; and
one of multiple first transmission characteristics indicated by the network-side device;
wherein the first transmission characteristic comprises at least one of the following:
a TRP identifier corresponding to a PDCCH for scheduling an uplink object;
a downlink transmission parameter used by a PDCCH for scheduling an uplink object;
an uplink transmission parameter used for transmitting;
an antenna panel used for transmitting; and
a priority.

6. The method according to claim 1, wherein the N first uplink objects are N PUSCHs;
each PUSCH of the N PUSCHs comprises any one of the following:
a single PUSCH;
one transmission of PUSCH repetitions; and
a PUSCH transmission of one transport block TB among PUSCH transmissions of multiple TBs scheduled at one time; and
the N PUSCHs meet at least one of the following:
a total quantity of ranks or layers of the N PUSCHs is less than or equal to a preset threshold;
starting and length indicator values SLIV corresponding to the N PUSCHs are the same; scrambling sequences respectively corresponding to the N PUSCHs are different;
target reference signals of the N PUSCHs respectively belong to different target reference signal code-division multiplexing groups; and
a data resource element RE corresponding to one of every two PUSCHs does not overlap with an RE occupied by a target reference signal corresponding to the other PUSCH in the every two PUSCHs, and the one PUSCH performs rate matching on the target reference signal corresponding to the other PUSCH;
wherein the target reference signal is a demodulation reference signal DMRS or a phase tracking reference signal PTRS.

7. The method according to claim 1, wherein the N first uplink objects are N PUCCHs; and
the N PUCCHs meet any one of the following:
resources of the N PUCCHs do not overlap in frequency domain;
the N PUCCHs are PUCCHs transmitted simultaneously using N uplink transmission parameters or N antenna panels; and
the N PUCCHs are PUCCHs transmitted simultaneously by a first PUCCH using N uplink transmission parameters or N antenna panels in a single frequency network SFN manner;
wherein the first PUCCH is any one of the following:
a first target PUCCH in the N PUCCHs; and
a second target PUCCH in the at least two uplink objects excluding the N PUCCHs, as determined by the terminal again.

8. The method according to claim 2, wherein the determining, by a terminal, N first uplink objects from at least two uplink objects of one time unit, wherein transmission time of the N first uplink objects overlap, and the at least two uplink objects are indicated by a network-side device comprises:
determining, by the terminal, one first uplink object from the each set of uplink objects according to a first rule to obtain the N first uplink objects;
wherein the first rule is used for discarding or multiplexing an uplink object.

9. The method according to claim 1, wherein
the transmitting, by the terminal, the N first uplink objects simultaneously, or transmitting a second uplink object comprises:
transmitting, by the terminal, the N first uplink objects simultaneously in a case that the terminal is in an allowed simultaneous transmission state; and
transmitting, by the terminal, the second uplink object in a case that the terminal is in a disallowed simultaneous transmission state.

10. The method according to claim 9, wherein
the terminal being in the allowed simultaneous transmission state is determined based on any one of the following:
the terminal receives simultaneous transmission state indication information semi-persistent configured by a radio resource control RRC parameter;
the terminal receives simultaneous transmission state indication information semi-persistent configured by an RRC parameter, and receives allowed simultaneous transmission indication information from a medium access control control element MAC CE or allowed simultaneous transmission indication information in downlink control information DCI; and
the terminal being in the disallowed simultaneous transmission state is determined according to any one of the following:
the terminal receives non-simultaneous transmission state indication information semi-persistent configured by an RRC parameter;
the terminal receives no simultaneous transmission state indication information semi-persistent configured by an RRC parameter; and
the terminal receives simultaneous transmission state indication information semi-persistent configured by an RRC parameter, and receives disallowed simultaneous transmission indication information from a MAC CE or disallowed simultaneous transmission indication information in DCI.

11. The method according to claim 1, wherein the second uplink object is the first target uplink object; and
before the transmitting, by the terminal, a second uplink object, the method further comprises:
determining, by the terminal, the first target uplink object according to a target sequence.

12. The method according to claim 11, wherein the target sequence is determined based on at least one of the following:
an uplink object scheduled by a TRP prescribed in a protocol or configured by a network;
an uplink object determined by the terminal;
whether an uplink object multiplexes uplink control information UCI;
a priority of UCI carried in an uplink object;
a transmitting priority of an uplink object;
a transmitting start time of an uplink object;
a start or end time of a PDCCH for scheduling an uplink object;
a size of modulation coding scheme MCS of an uplink object; and
a size of rank or layer of an uplink object.

13. The method according to claim 1, wherein before the determining, by a terminal, N first uplink objects from at least two uplink objects of a target slot, wherein transmission time of the N first uplink objects overlap, and the at least two uplink objects are indicated by a network-side device, the method further comprises:
dynamically transmitting, by the terminal, signaling to the network-side device;
wherein the signaling is used to indicate at least one of the following:
whether the terminal expects to transmit uplink objects simultaneously; and
antenna panels expected by the terminal to be used for transmitting uplink objects.

14. A method for transmitting an uplink object, comprising:
indicating, by a network-side device, at least two uplink objects to a terminal; and
transmitting, by the network-side device, indication information to the terminal;
wherein the indication information is used to indicate that the terminal is in a target state; and
the target state comprises any one of the following: allowed simultaneous transmission state, and disallowed non-simultaneous transmission state.

15. The method according to claim 14, wherein the indication information is determined based on a sounding reference signal SRS transmitted by the terminal;
wherein the SRS is used by the network-side device to measure interference between antenna panels corresponding to the at least two uplink objects; or
the SRS is used by the network-side device to measure interference between transmitting signals determined using at least two uplink transmission parameters corresponding to the at least two uplink objects.

16. The method according to claim 14 or 15, wherein before the transmitting, by the network-side device, indication information to the terminal, the method further comprises:
receiving, by the network-side device, signaling dynamically transmitted by the terminal;
wherein the signaling is used to indicate at least one of the following:
whether the terminal expects to transmit uplink objects simultaneously; and
antenna panels expected by the terminal to be used for transmitting uplink objects; and
the transmitting, by the network-side device, indication information to the terminal comprises:
transmitting, by the network-side device, indication information to the terminal based on the signaling.

17. An apparatus for transmitting an uplink object, wherein the apparatus comprises a determining module and a transmitting module; wherein
the determining module is configured to determine N first uplink objects from at least two uplink objects of one time unit, transmission time of the N first uplink objects overlap, and the at least two uplink objects are indicated by a network-side device, wherein N is an integer greater than 1; and
the transmitting module is configured to transmit the N first uplink objects simultaneously or transmit a second uplink object;
wherein each first uplink object of the N first uplink objects belongs to one set of uplink objects in N sets of uplink objects corresponding to the at least two uplink objects;
the first uplink object is at least one of the following:
a physical uplink shared channel PUSCH;
a physical uplink control channel PUCCH; and
an uplink reference signal RS; and
the second uplink object is any one of the following:
a first target uplink object in the N first uplink objects; and
a second target uplink object in the at least two uplink objects excluding the N first uplink obj ects.

18. An apparatus for transmitting an uplink object, wherein the apparatus comprises an indication module and a transmitting module; wherein
the indication module is configured to indicate at least two uplink objects to a terminal; and
the transmitting module is configured to transmit indication information to the terminal;
wherein the indication information is used to indicate that the terminal is in a target state; and
the target state comprises any one of the following: allowed simultaneous transmission state, and disallowed non-simultaneous transmission state.

19. A terminal, comprising a processor and a memory, wherein the memory stores a program or instructions capable of running on the processor, and when the program or the instructions are executed by the processor, the steps of the method for transmitting an uplink object according to any one of claims 1 to 13 are implemented.

20. A network-side device, comprising a processor and a memory, wherein the memory stores a program or instructions capable of running on the processor, and when the program or the instructions are executed by the processor, the steps of the method for transmitting an uplink object according to any one of claims 14 to 16 are implemented.

21. A communication system, wherein the communication system comprises the apparatus for transmitting an uplink object according to claim 17 and the apparatus for transmitting an uplink object according to claim 18; or
the communication system comprises the terminal according to claim 19 and the network-side device according to claim 20.

22. A readable storage medium, wherein the readable storage medium has a program or instructions stored thereon; and when the program or the instructions are executed by a processor, the steps of the method for transmitting an uplink object according to any one of claims 1 to 13 are implemented, or the steps of the method for transmitting an uplink object according to any one of claims 14 to 16 are implemented.
